# FASCICULE DE BREVET EUROPEEN

(11) **EP 2 092 010 B1**
(45) Date de publication et mention de la délivrance du brevet: **26.01.2011**
(21) Numéro de dépôt: 07819701.9
(22) Date de dépôt: 08.11.2007
(51) Int. Cl.: C08K 5/00, C08K 5/18

(54) **COMPOSITION DE CAOUTCHOUC POUR PNEUMATIQUE INCORPORANT UN NOUVEAU SYSTEME ANTI-OXYDANT**
KAUTSCHUKZUSAMMENSETZUNG FÜR REIFEN MIT NEUEM ANTIOXIDANSSYSTEM
RUBBER COMPOSITION FOR TYRES INCORPORATING A NOVEL ANTIOXIDANT SYSTEM

(30) Priorité: 09.11.2006 FR 0609908
(43) Date de publication de la demande: 26.08.2009
(73) Titulaire: Societe de Technologie Michelin S.A., 63000 Clermont-Ferrand (FR); Michelin Recherche et Technique S.A., 1763 Granges-Paccot (CH)
(72) Inventeur: ARAUJO DA SILVA, José, Carlos, 63430 Pont-du-Chateau (FR); NIORE, Pierre-Antoine, 91490 Moigny Sur Ecole (FR); REMY, Arnaud, 63190 Orleat (FR)
(74) Mandataire: Cohen, Sylvia
(86) Numéro de dépôt international: PCT/EP2007/009694
(87) Numéro de publication internationale: WO 2008/055683

(56) Documents cités:
- WO-A-2005/113666
- FR-A- 1 354 536
- US-A- 3 277 174

## Description

La présente invention est relative aux compositions d'élastomères diéniques ainsi qu'aux agents antioxydants utilisés pour la protection anti-vieillissement de telles compositions.

Elle se rapporte plus particulièrement aux compositions d'élastomères diéniques utilisables pour constituer tout ou partie de la matrice caoutchouteuse des pneumatiques, notamment aux armatures de renforcement du sommet de ces pneumatiques, encore appelées « ceintures ».

On rappellera brièvement qu'un pneumatique à armature de carcasse radiale comporte, de manière connue, une bande de roulement, deux bourrelets inextensibles, deux flancs reliant les bourrelets à la bande de roulement et une ceinture disposée circonférentiellement entre l'armature de carcasse et la bande de roulement, cette ceinture étant constituée de diverses nappes (ou "couches") de caoutchouc renforcées ou non par des éléments de renforcement (ou "renforts") tels que des câblés ou des monofilaments, du type métalliques ou textiles.

La ceinture de pneumatique est généralement constituée d'au moins deux couches ou nappes de ceinture superposées, dites parfois nappes "de travail" ou nappes "croisées", dont les renforts sont disposés pratiquement parallèles les uns aux autres à l'intérieur d'une couche, mais croisés d'une couche à l'autre, c'est-à-dire inclinés, symétriquement ou non, par rapport au plan circonférentiel médian, d'un angle qui est généralement compris entre 10° et 45° selon le type de pneumatique considéré. Chacune de ces deux couches croisées est constituée d'une matrice de caoutchouc généralement à base isoprénique, dite parfois "gomme de calandrage", enrobant les renforts. Les couches croisées peuvent être complétées par diverses autres nappes ou couches de caoutchouc auxiliaires, de largeurs variables selon les cas, comportant ou non des renforts ; on citera à titre d'exemple de simples coussins de gomme, des couches dites "de protection" chargées de protéger le reste de la ceinture des agressions externes, des perforations, ou encore des couches dites "de frettage" comportant des renforts orientés sensiblement selon la direction circonférentielle (couches dites "à zéro degré"), qu'elles soient radialement externes ou internes par rapport aux couches croisées.

Cette ceinture de pneumatique doit satisfaire de manière connue à de nombreuses exigences, parfois contradictoires, notamment :
(i) être la plus rigide possible à faible déformation, car elle contribue d'une manière substantielle à rigidifier le sommet du pneumatique ;
(ii) avoir une hystérèse aussi basse que possible, pour d'une part minimiser l'échauffement en roulage de la zone interne du sommet et d'autre part réduire la résistance au roulement du pneumatique, synonyme d'économie de carburant ;
(iii) enfin posséder une endurance élevée, en particulier vis-à-vis du phénomène de séparation ou fissuration des extrémités des couches croisées dans la zone "d'épaule" du pneumatique, problème connu sous le terme de "clivage".

La troisième condition exige notamment des compostions de caoutchouc entrant dans la constitution des ceintures des pneumatiques qu'elles présentent une résistance très élevée à la propagation des fissures et à la thermo-oxydation, atteinte notamment grâce à l'emploi d'agents antioxydants offrant une protection anti-vieillissement efficace.

Cette exigence est particulièrement forte pour les enveloppe de pneumatiques Poids-lourd, conçues pour pouvoir être rechapées une ou plusieurs fois lorsque les bandes de roulement qu'elles comportent atteignent un degré d'usure critique après un roulage prolongé.

Les antioxydants utilisés depuis très longue date comme agents de protection anti-vieillissement dans les compositions de caoutchouc pour pneumatiques, notamment dans les ceintures de tels pneumatiques, appartiennent à la famille des dérivés de la paraphénylènediamine ("PPD") tels que par exemple la N-isopropyl-N'-phényl-paraphénylènediamine ("I-PPD") ou la N-1,3-diméthylbutyl-N'-phényl-paraphénylènediamine ("6-PPD"), à la fois excellents antioxydants et antiozonants (voir par exemple les demandes WO 2004/033548, WO 2005/0635J.0, WO 2005/133666). Le brevet US-A-3 277 174 propose d'autre structures d'antioxidants de type 4,4'-his(alkylamino)-triphénylamine.

Or, les Demanderesses ont découvert lors de leurs recherche que le remplacement d'une partie d'un tel antioxydant dérivé de la paraphénylènediamine par un autre antioxydant spécifique, non utilisé jusqu'ici en pneumatique, permet d'augmenter la résistance, sur le long tenue, à la fatigue et à la propagation de fissures de ces compositions de caoutchouc pour pneumatiques.

En conséquence, un premier objet de l'invention concerne une composition de caoutchouc à base d'au moins un élastomère diénique, une charge renforçante, un système de réticulation et un système antioxydant, caractérisée en ce que le dit système antioxydant comporte au moins deux antioxydant "A" et "B" :
A. une N-alkyl-N'-phényl-paraphénylènediamine répondant à la formule (I) : 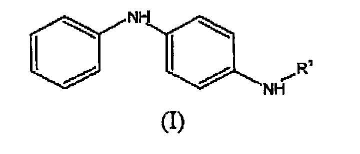
B. une 4,4'-bis(alkylamino)-triphénylamine répondant à la formule (II): 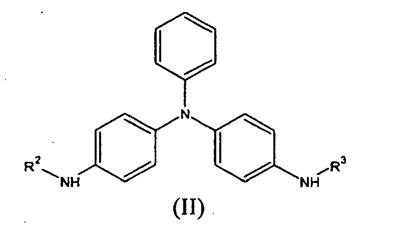 formules dans lesquelles R¹, R² et R³, identiques ou différents, représentent chacun un groupe alkyle, linéaire ou ramifié, ayant de 1 à 12 atomes de carbone ou un groupe cycloalkyle ayant de 5 à 8 atomes de carbone, le rapport pondéral A/B étant compris entre 0,2 et 5,0.

L'invention offre ainsi aux ceintures des pneumatiques, ainsi qu'à ces pneumatiques eux-mêmes, un compromis global de propriétés nouveau et particulièrement avantageux.

L'invention a également pour objet l'utilisation d'une composition conforme à l'invention pour la fabrication de pneumatiques neufs ou pour le rechapage de pneumatiques usagés, tout particulièrement dans le cas de pneumatiques Poids-lourd.

Les compositions de caoutchouc selon l'invention sont préparées par un procédé qui constitue un autre objet de la présente invention, ledit procédé comportant les étapes suivantes :
- incorporer à un élastomère diénique, dans un mélangeur,
   - une charge renforçante ;
   - un système anti-oxydant,
   en malaxant thermomécaniquement le tout, en une ou plusieurs fois, jusqu'à atteindre une température maximale comprise entre 110°C et 190°C ;
- refroidir l'ensemble à une température inférieure à 100°C ;
- incorporer ensuite un système de réticulation ;
- malaxer le tout jusqu'à une température maximale inférieure à 110°C,
ledit procédé étant caractérisé en ce que ledit système antioxydant comporte au moins les deux antioxydants "A" et "B" précités, le rapport pondéral A/B étant compris entre 0,2 et 5,0.

L'invention concerne également tout pneumatique comportant une composition conforme à l'invention, notamment que ce pneumatique soit du type radial ou non radial.

Les pneumatiques de l'invention sont particulièrement destinés à équiper des véhicules à moteur de type tourisme, SLTV (*"Sport Utility Vehicles"*), deux roues (notamment motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

L'invention concerne également, en soi, un système antioxydant, utilisable notamment pour la protection anti-vieillissement d'une composition de caoutchouc pour pneumatique, caractérisé en ce que ledit système comporte au moins les deux antioxydants "A" et "B" précités, le rapport pondéral A/B étant compris entre 0,2 et 5,0.

L'invention concerne également l'utilisation d'un système antioxydant selon l'invention pour la protection anti-vieillissement des compositions de caoutchouc, notamment dans les pneumatiques et en particulier dans les ceintures de tels pneumatiques.

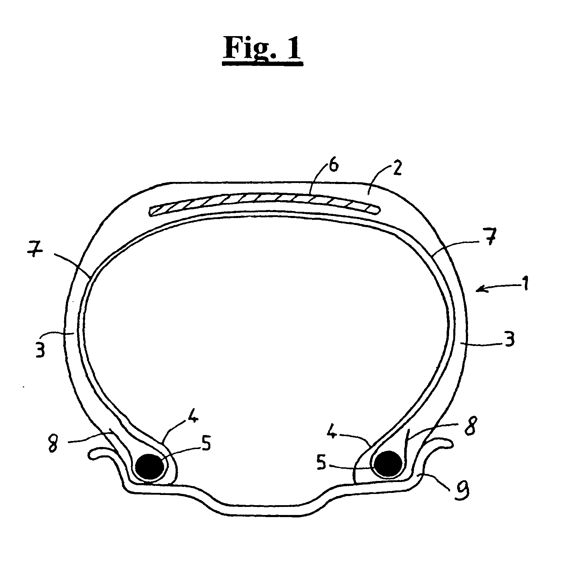

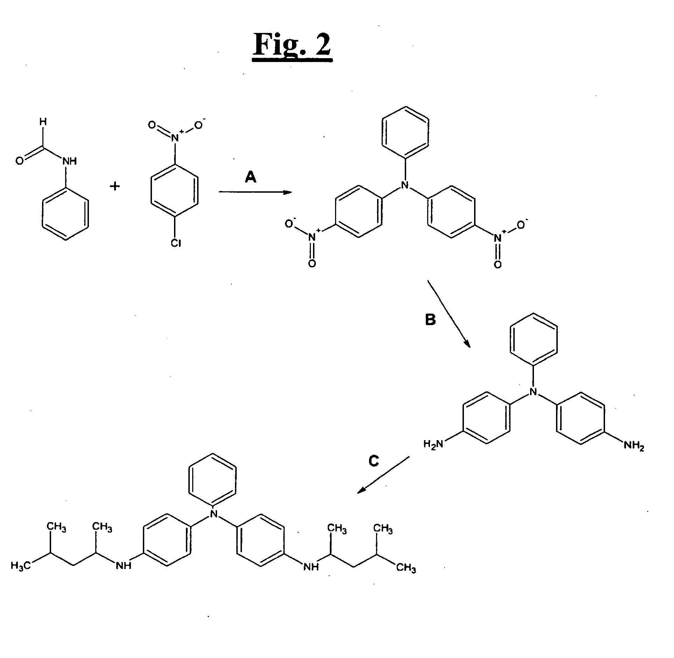

L'invention ainsi que ses avantages seront aisément compris à la lumière de la description et des exemples de réalisation qui suivent, ainsi que des figures schématiques relatives à ces exemples qui représentent une coupe radiale d'un pneumatique Poids-lourd à armature de carcasse radiale (Fig. 1) ainsi qu'un schéma de synthèse d'un composé de formule (II) convenant à la ceinture du pneumatique de l'invention (Fig. 2).

### I. MESURES ET TESTS UTILISES

Les compositions de caoutchouc sont caractérisées avant et après cuisson, comme indiqué ci-après.

### A) Plasticité Mooney:

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre).

### B) Rhéométrie:

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation. Les mesures sont traitées selon la norme DIN 53529 - partie 2 (mars 1983) : tᵢ est le délai d'induction, c'est-à-dire le temps nécessaire au début de la réaction de vulcanisation ; t_{α} (par exemple t₉₉) est le temps nécessaire pour atteindre une conversion de α%, c'est-à-dire α% (par exemple 99%) de l'écart entre les couples minimum et maximum. On mesure également la constante de vitesse de conversion notée K (exprimée en min⁻¹), d'ordre 1, calculée entre 30% et 80% de conversion, qui permet d'apprécier la cinétique de vulcanisation.

### C) Essais de traction:

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation) les modules sécants dits "nominaux" (ou contraintes apparentes, en MPa) ou les modules sécants dits "vrais" (ramenés dans ce cas à la section réelle de l'éprouvette) à 10% d'allongement (notés respectivement "MA10" et "E10"), 100% d'allongement (respectivement "MA100" et "E100") et 300% d'allongement (respectivement "MA300" et "E300"). Toutes ces mesures de traction sont effectuées dans les conditions normales de température (23±2°C) et d'hygrométrie (50±5% d'humidité relative), selon la norme française NF T 40-101 (décembre 1979). On mesure également les contraintes à la rupture (en MPa) et les allongements à la rupture (en %), à une température de 23°C.

### D) Test "MFTRA":

La résistance à la fatigue et à la propagation des entailles (avec amorce initiale), exprimée en nombre de cycles ou en unités relatives (u.r.), est mesurée de manière connue sur une éprouvette comportant une entaille de 1 mm et soumise à des tractions répétées de faible fréquence jusqu'à un allongement de 20%, à l'aide d'un appareil Monsanto (type "MFTR"), jusqu'à rupture de l'éprouvette, selon la norme française NF T46-021.

Le test ci-dessus est pratiqué d'une part à l'état initial et d'autre part après un vieillissement thermo-oxydant accéléré de 26 jours, l'échantillon de composition testée étant alors placé dans une étuve ventilée maintenue à une température de 80°C et sous une humidité ambiante de 40%. Une valeur supérieure à celle du témoin, arbitrairement fixée à 100, indique un résultat amélioré c'est-à-dire une résistance supérieure.

### II. DESCRIPTION DETAILLEE DE L'INVENTION

Les compositions élastomériques de l'invention sont à base d'au moins les constituants suivants: (i) un (au moins un) élastomère diénique ; (ii) une (au moins une) charge renforçante ; (iii) un système de réticulation ; et (iv) un système antioxydant tel que décrit en détail ci-après.

Bien entendu, par l'expression composition "à base de", il faut entendre une composition comportant le mélange et/ou le produit de réaction des différents constituants utilisés, certains de ces constituants de base étant susceptibles de, ou destinés à réagir entre eux, au moins en partie, lors des différentes phases de fabrication des compositions de caoutchouc, des ceintures et des pneumatiques, en particulier au cours de leur vulcanisation.

Dans la présente description, sauf indication expresse différente, tous les pourcentages (%) indiqués sont des % en masse.

### II-1. Elastomère diénique

Par élastomère (ou caoutchouc, les deux étant considérés synonymes) du type "diénique", on entend de manière générale un élastomère issu au moins en partie (i.e., un homopolymère ou un copolymère) de monomères diènes, c'est-à-dire de monomères porteurs de deux doubles liaisons carbone-carbone (conjuguées ou non).

Les élastomères diéniques peuvent être classés de manière connue en deux catégories : ceux dits "essentiellement insaturés" et ceux dits "essentiellement saturés". De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles). C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être mis en oeuvre dans les compositions conformes à l'invention :
(a) - tout homopolymère obtenu par polymérisation d'un monomère diène conjugué, ayant de préférence de 4 à 12 atomes de carbone ;
(b) - tout copolymère obtenu par copolymérisation d'un ou plusieurs diènes conjugués entre eux ou avec un ou plusieurs composés vinyle aromatique ayant de préférence de 8 à 20 atomes de carbone ;
(c) - un copolymère ternaire obtenu par copolymérisation d'éthylène, d'une α-oléfine ayant de préférence de 3 à 6 atomes de carbone avec un monomère diène non conjugué ayant de préférence de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène ;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est en premier lieu mise en oeuvre avec des élastomères diéniques essentiellement insaturés, en particulier du type (a) ou (b) ci-dessus.

Plus préférentiellement, l'élastomère diénique est choisi dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères. De tels copolymères sont plus préférentiellement choisis dans le groupe constitué par les copolymères de butadiène-styrène (SBR), que ces derniers soient préparés par polymérisation en émulsion (ESBR) comme en solution (SSBR), les copolymères d'isoprène-butadiène (BIR), les copolymères d'isoprène-styrène (SIR) et les copolymères d'isoprène-butadiène-styrène (SBIR).

Parmi les polybutadiènes, conviennent en particulier ceux ayant une teneur (% molaire) en unités -1,2 comprise entre 4% et 80% ou ceux ayant une teneur (% molaire) en cis-1,4 supérieure à 80%. Parmi les polyisoprènes de synthèse, conviennent en particulier les cis-1,4-polyisoprènes, de préférence ceux ayant un taux (% molaire) de liaisons cis-1,4 supérieur à 90%. Parmi les copolymères de butadiène ou d'isoprène, on entend en particulier les copolymères obtenus par copolymérisation d'au moins l'un de ces deux monomères avec un ou plusieurs composés vinyle-aromatique ayant de 8 à 20 atomes de carbone. A titre de composés vinyle-aromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène. Les copolymères peuvent contenir entre 99% et 20% d'unités diéniques et entre 1% et 80% d'unités vinyle-aromatique.

Les compositions conformes à l'invention sont préférentiellement destinés aux pneumatiques, en particulier aux armatures de carcasse des pneumatiques pour véhicules industriels tels que camionnettes ou Poids-lourd, ainsi qu'aux armatures de sommet des pneumatiques destinés tant à des véhicules tourisme qu'à des véhicules industriels.

On utilise alors, de préférence, au moins un élastomère isoprénique, c'est-à-dire un homopolymère ou copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR).

L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%.

En coupage (i.e., mélange) avec l'élastomère isoprénique ci-dessus, les compositions de l'invention peuvent contenir des élastomères diéniques autres qu'isopréniques, de préférence à titre minoritaire (i.e., pour moins de 50 pce). L'élastomère isoprénique représente plus préférentiellement 75 à 100% en poids du total d'élastomères diéniques, soit 75 à 100 pce (pce = parties en poids pour cent parties d'élastomère).

A titre de tels élastomères diéniques autres qu'isopréniques, on citera notamment tout élastomère diénique du type insaturé choisi en particulier dans le groupe constitué par les polybutadiènes (BR), en particulier les polybutadiènes cis-1,4 ou 1,2-syndiotactique et ceux ayant une teneur (% molaire) en unités-1,2 comprise entre 4% et 80%, et les copolymères de butadiène, notamment les copolymères de styrène-butadiène (SBR), et en particulier ceux ayant une teneur en styrène comprise entre 5 et 50% en poids et plus particulièrement entre 20% et 40% en poids, une teneur (% molaire) en liaisons -1,2 de la partie butadiénique comprise entre 4% et 65%, une teneur (% molaire) en liaisons trans-1,4 comprise entre 30% et 80%, les copolymères de styrène-butadiène-isoprène (SBIR), et les mélanges de ces différents élastomères (BR, SBR et SBIR).

A titre d'exemple, lorsque la composition est destiné à un pneumatique du type tourisme, si un tel coupage est utilisé, c'est préférentiellement un mélange de SBR et de BR qui est utilisé en coupage avec le caoutchouc naturel, de préférence jusqu'à concurrence de moins de 25% en poids (soit moins de 25 pce) de mélange SBR et BR.

La composition de l'invention est particulièrement utilisable dans une ceinture de pneumatique Poids-lourd, qu'il s'agisse d'un pneumatique neuf ou usagé (cas d'un rechapage). Dans un tel cas, l'élastomère isoprénique est préférentiellement utilisé seul, c'est-à-dire sans coupage avec un autre élastomère diénique ou polymère. Plus préférentiellement encore, cet élastomère isoprénique est exclusivement du caoutchouc naturel.

### II-2. Charge renforçante

On peut utiliser tout type de charge renforçante connue pour ses capacités à renforcer une composition de caoutchouc utilisable pour la fabrication de pneumatiques, par exemple une charge organique tel que du noir de carbone, ou encore une charge inorganique renforçante telle que de la silice à laquelle doit être associé un agent de couplage.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à l'élastomère isoprénique sous la forme d'un masterbatch (voir par exemple demandes WO 97/36724 ou WO 99/16600).

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" *("non-black filler")* par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, en particulier de la silice (SiO₂) ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HD"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

Lorsque les compositions de l'invention sont destinées à des bandes de roulement de pneumatique à faible résistance au roulement, la charge inorganique renforçante utilisée, en particulier s'il s'agit de silice, a de préférence une surface BET comprise entre 45 et 400 m²/g, plus préférentiellement comprise entre 60 et 300 m²/g.

De manière préférentielle, le taux de charge renforçante totale (noir de carbone, charge inorganique renforçante ou mélange des deux types de charge) est compris entre 20 et 200 pce, plus préférentiellement entre 30 et 150 pce, l'optimum étant de manière connue différent selon les applications particulières visées.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou dés polyorganosiloxanes bifonctionnels.

On utilise notamment des silanes polysulfurés, dits "symétriques" ou "asymétriques" selon leur structure particulière, tels que décrits par exemple dans les demandes WO03/002648 et WO03/002649.

Conviennent en particulier, sans que la définition ci-après soit limitative, des silanes polysulfurés dits "symétriques" répondant à la formule générale suivante:
Z - A - Sₙ - A - Z , dans laquelle:
   - n est un entier de 2 à 8 (de préférence de 2 à 5) ;
   - A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
   - Z répond à l'une des formules ci-après: 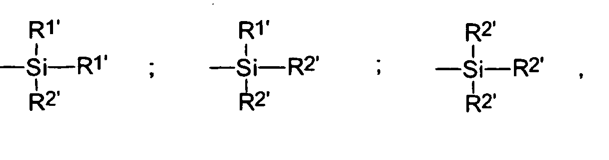 dans lesquelles:
   - les radicaux R^{1'}, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R^{2'} substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule ci-dessus, notamment des mélanges usuels disponibles commercialement, la valeur moyenne des "n" est un nombre fractionnaire de préférence compris entre 2 et 5, plus préférentiellement proche de 4. Mais l'invention peut être aussi avantageusement mise en oeuvre par exemple avec des alkoxysilanes disulfurés (n = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-diakyl(C₁-C₄)silylpropyl), plus particulièrement le tétrasulfure de bis-monoéthoxydiméthylsilylpropyl tel que décrit dans la demande de brevet WO 02/083782.

A titre d'agent de couplage autre qu'alkoxysilane polysulfuré, on citera notamment des POS (polyorganosiloxanes) bifonctionnels ou encore des polysulfures d'hydroxysilane (R^{2'} = OH dans la formule ci-dessus) tels que décrits dans les demandes de brevet WO 02/30939 et WO 02/31041.

Dans les compositions de caoutchouc conformes à l'invention, la teneur en agent de couplage est préférentiellement comprise entre 4 et 12 pce, plus préférentiellement entre 3 et 8 pce.

L'agent de couplage pourrait être préalablement greffé sur l'élastomère diénique ou sur la charge inorganique renforçante. On préfère toutefois, notamment pour des raisons de meilleure mise en oeuvre des compositions à l'état cru, utiliser l'agent de couplage soit greffé sur la charge inorganique renforçante, soit à l'état libre (i.e., non greffé).

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### II-3. Système antioxydant

Le système antioxydant de l'invention a pour caractéristique essentielle de comporter en combinaison deux agents antioxydants notés "A" et "B" :
A. une N-alkyl-N'-phényl-paraphénylènediamine répondant à la formule (I) : 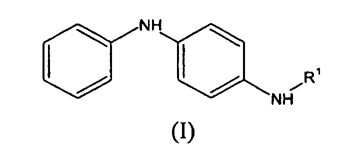
B. une 4,4'-bis(alkylamino)-triphénylamine répondant à la formule (II) : 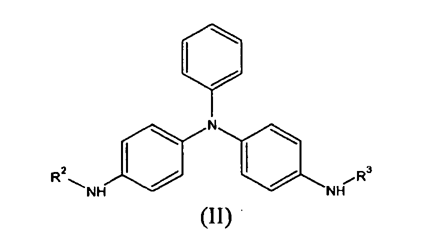 formules dans lesquelles R¹, R² et R³, identiques ou différents, représentent chacun un groupe alkyle, linéaire ou ramifié, ayant de 1 à 12 atomes de carbone ou un groupe cycloalkyle ayant de 5 à 8 atomes de carbone, le rapport pondéral A/B étant compris entre 1 /5 et 5/1.

De préférence, le rapport pondéral A/B est compris entre 1/4 et 4/1, plus préférentiellement entre 1/3 et 3/1, en particulier entre 1/2 et 2/1 (soit entre 0,5 et 2,0).

De préférence, R¹, R² et R³, identiques ou différents, représentent chacun un alkyle ayant de 2 à 8 atomes de carbone, choisi préférentiellement dans le groupe constitué par éthyle, propyle (i.e., n-propyle, iso-propyle), butyle (i.e., n-butyle, sec-butyle et tert-butyle), pentyle, hexyle, heptyle et octyle, ou un groupe cycloalkyle ayant de 5 à 8 atomes de carbone (cyclopentyle, cyclohexyle, cycloheptyle, cyclooctyle), plus préférentiellement un groupe cyclohexyle.

Parmi les composés de formule (I) et (II) ci-dessus, on utilise plus préférentiellement des composés dont les groupes R¹, R² et R³ sont ramifiés, de formules (I-bis) et (II-bis) respectives ci-dessous : 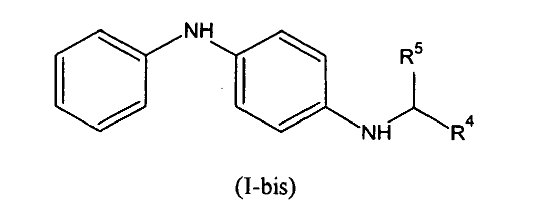 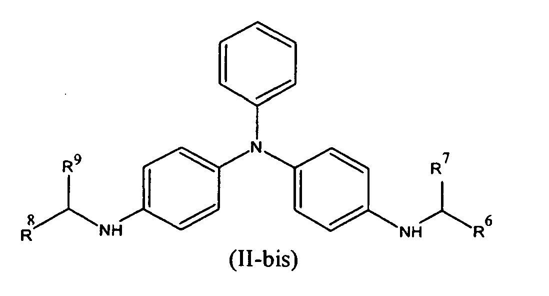 dans lesquelles R⁴, R⁵, R⁶, R⁷, R⁸ et R⁹, identiques ou différents entre eux, représentent chacun un groupe alkyle dont le nombre d'atomes de carbone est conforme aux définitions préférentielles données ci-dessus pour R¹, R² et R³.

Les composés de formule (I-bis) ci-dessus sont bien connus de l'homme du métier, comme rappelé en introduction du présent mémoire.

Les composés répondant aux formules génériques (II) et (II-bis) ci-dessus sont connus comme antiozonants ou antioxydants pour le caoutchouc, certains ont par exemple été décrits, ainsi que leur synthèse, dans le brevet US 3,277,174. Mais aucune application dans les compositions d'élastomère diénique pour pneumatiques, a fortiori dans les ceintures desdits pneumatiques, n'y est envisagée.

A titre d'exemples plus préférentiels de radicaux R¹, R² et R³ ramifiés, on citera en particulier l'isopropyle (a), le 1,3-diméthylbutyle (b) et le 1,4-diméthylpentyle (c) de formules ci-dessous :

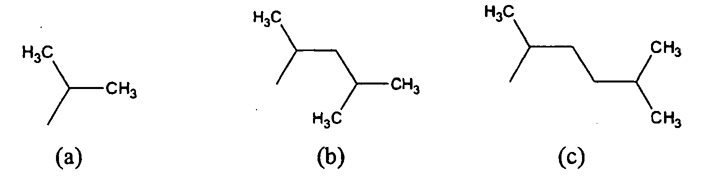

Ainsi, selon un mode de réalisation particulièrement préférentiel de l'invention, on utilise comme antioxydant A l'un des deux composés suivants :
- N-isopropyl-N'-phényl-paraphénylènediamine ("I-PPD") répondant à la formule : 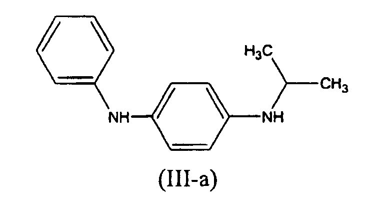
- N-1,3-diméthylbutyl-N'-phényl-paraphénylènediamine ("6-PPD") répondant à la formule :

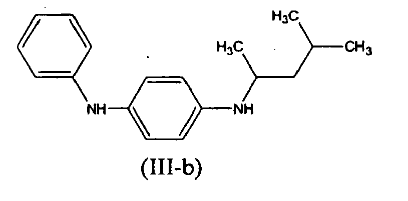

Selon un autre mode de réalisation particulièrement préférentiel de l'invention, combiné ou non au précédent, on utilise comme antioxydant B l'un des trois composés suivants :
- 4,4'-bis(isopropylamino)-triphénylamine répondant à la formule spécifique : 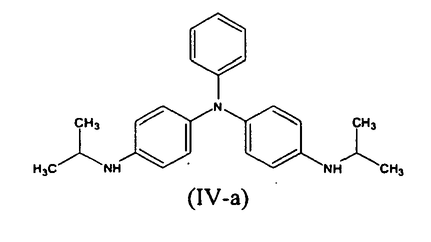
- 4,4'-bis(1,3-diméthylbutylamino)-triphénylamine répondant à la formule spécifique : 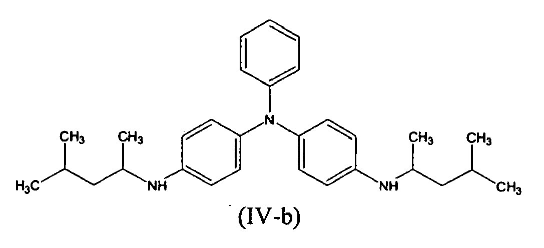
- 4,4'-bis(1,4-diméthylpentylamino)-triphénylamine répondant à la formule spécifique :

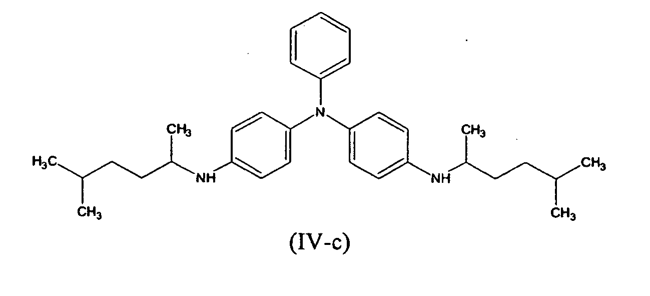

Dans la composition de caoutchouc de l'invention, le taux de chaque antioxydant A et B est préférentiellement compris entre 0,5 et 5 pce, celui du système antioxydant total étant lui-même préférentiellement compris entre 1 et 10 pce. En dessous du minimum indiqué, l'endurance peut se révéler insuffisante alors qu'au-delà du maximum préconisé, on s'expose à un risque de dégradation des propriétés mécaniques du à un effet plastifiant parasite. Pour toutes ces raisons, le taux de chaque antioxydant A et B est plus préférentiellement compris entre 0,5 et 2 pce, celui du système antioxydant total étant lui-même plus préférentiellement compris entre 1 et 4 pce.

### II-4. Additifs divers

Les compositions de caoutchouc conformes à l'invention peuvent comporter également tout ou partie des additifs usuels utilisés dans les compositions de caoutchouc pour pneumatiques, notamment pour ceintures de pneumatiques, comme par exemple des huiles d'extension, des plastifiants, des agents de protection anti-vieillissement autres que ceux précités, tels que anti-ozone, autres anti-ozonants chimiques ou anti-oxydants, des agents anti-fatigue, des accepteurs et donneurs de méthylène, bismaléimides ou autres résines renforçantes, un système de réticulation à base soit de soufre, soit de donneurs de soufre et/ou de peroxyde, des accélérateurs de vulcanisation, des activateurs ou retardateurs de vulcanisation, des agents antiréversion tels que par exemple l'hexathiosulfonate de sodium ou le N,N'-m-phénylène-biscitraconimide, des systèmes promoteurs d'adhésion du caoutchouc au métal tels que par exemple des sels ou complexes métalliques (par exemple de cobalt, bore, phosphore, ou encore des sels de lanthanide tels que décrits dans la demande WO 2005/133666 précitée).

Les matrices isopréniques peuvent également contenir, en complément d'éventuels agents de couplage pour charges inorganiques renforçantes, des agents de recouvrement de ces charges inorganiques, ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur processabilité.

### II-5. Compositions de caoutchouc et pneumatiques conformes à l'invention

Les compositions diéniques précédemment décrites sont notamment utilisables pour former tout ou partie de la matrice caoutchouteuse de la ceinture d'un pneumatique, en particulier d'un pneumatique pour véhicule Poids-lourd ou tourisme.

Elles sont par exemple utilisables comme gomme de calandrage d'une couche ou nappe de ceinture de tissu câblé, qu'il s'agisse d'une couche "croisée", d'une couche de protection ou d'une couche de frettage (à zéro degré), ou par exemple destinées à former un simple coussin, bande ou bandelette de gomme, dépourvu(e) de renforts, disposé(e) radialement au-dessus ou au-dessous des différentes couches de ceinture précitées, voire intercalé(e) entre ces dernières (par exemple pour constituer une sous-couche de la bande de roulement) ou encore placé(e) aux extrémités latérales de ces couches de ceinture, dans les zones "épaule" du pneumatique (par exemple pour constituer des gommes de découplage).

A titre d'exemple, la figure 1 annexée représente de manière schématique une coupe radiale d'un pneumatique Poids-lourd 1 à armature de carcasse radiale pouvant être conforme ou non à l'invention, dans cette représentation générale. Ce pneumatique 1 comporte un sommet 2, deux flancs 3, deux bourrelets 4, une armature de carcasse radiale 7 s'étendant d'un bourrelet à l'autre. Le sommet 2, surmonté d'une bande de roulement (non représentée sur cette figure très schématique, pour simplification) est de manière connue renforcé par une ceinture 6 constituée d'au moins deux couches sommet "croisées", recouvertes d'au moins une couche sommet de protection, toutes ces couches étant renforcées par des câblés métalliques en acier au carbone. L'armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est constituée d'au moins une nappe ou couche renforcée par des câbles métalliques dits "radiaux", c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de la ceinture 6).

Le pneumatique conforme à l'invention de l'exemple ci-dessus a pour caractéristique essentielle de comporter dans son sommet 2 une ceinture 6 dont la gomme de calandrage des couches de ceinture 6 (deux couches croisées et une couche de protection, dans cet exemple) comporte le système antioxydant de l'invention.

Dans le cas d'un pneumatique comportant par exemple une ou plusieurs couches "à zéro degré", il est préférable que la gomme de calandrage du tissu câblé, qu'il se présente sous forme d'une couche d'une certaine largeur, voisine de la largeur des couches croisées, de bandelettes plus étroites voire d'un fil unitaire gainé de caoutchouc, soit également à base d'une composition diénique, notamment isoprénique, comportant le système antioxydant de l'invention.

Selon un mode préférentiel de réalisation de l'invention, la composition de caoutchouc à base de l'élastomère diénique (notamment isoprénique), de la charge renforçante et du système antioxydant de l'invention présente, à l'état vulcanisé (i.e., après cuisson), un module sécant en extension (E10) qui est supérieur à 5 MPa, plus préférentiellement compris entre 7 et 20 MPa. C'est dans les domaines de modules indiqués ci-dessus que l'on a enregistré le meilleur compromis d'endurance.

### 11-6. Préparation des compositions de caoutchouc

Les compositions de caoutchouc sont fabriquées dans des mélangeurs appropriés, en utilisant deux phases de préparation successives bien connues de l'homme du métier : une première phase de travail ou malaxage thermo-mécanique (parfois qualifiée de phase "non-productive") à haute température, jusqu'à une température maximale (notée Tₘₐₓ) comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 40°C et 100°C, phase de finition au cours de laquelle est incorporé le système de réticulation ou vulcanisation.

Le procédé de fabrication des compositions de l'invention est caractérisé en ce qu'au moins la charge renforçante et le système antioxydant de l'invention sont incorporés par malaxage à l'élastomère diénique (notamment isoprénique) au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre une température maximale comprise entre 110°C et 190°C, de préférence comprise entre 130°C et 180°C.

A titre d'exemple, la première phase (non-productive) est conduite en une seule étape thermomécanique au cours de laquelle on introduit, dans un mélangeur approprié tel qu'un mélangeur interne usuel, dans un premier temps tous les constituants de base nécessaires (élastomère diénique, charge renforçante et système antioxydant, puis dans un deuxième temps, par exemple après une à deux minutes de malaxage, les éventuels agents de mise en oeuvre complémentaires et autres additifs divers, à l'exception du système de réticulation ou vulcanisation. La durée totale du malaxage, dans cette phase non-productive, est de préférence comprise entre 2 et 10 minutes.

Après refroidissement du mélange ainsi obtenu, on incorpore alors le système de vulcanisation à basse température, généralement dans un mélangeur externe tel qu'un mélangeur à cylindres ; le tout est alors mélangé (phase productive) pendant quelques minutes, par exemple entre 5 et 15 minutes.

La composition finale ainsi obtenue est ensuite calandrée, par exemple sous la forme de plaques (épaisseur de 2 à 3 mm) ou de fines feuilles de caoutchouc pour la mesure de ses propriétés physiques ou mécaniques, notamment pour une caractérisation au laboratoire, ou encore extrudée pour former un profilé de caoutchouc par exemple utilisable directement, après découpage ou assemblage aux dimensions visées, et après incorporation des renforts métalliques ou textiles souhaités, comme couche de ceinture de pneumatique.

En résumé, le procédé conforme à l'invention, pour préparer une composition de caoutchouc à base d'au moins un élastomère diénique, une charge renforçante, un système de réticulation et un agent antioxydant, comporte les étapes suivantes:
- incorporer à un élastomère diénique, notamment isoprénique, dans un mélangeur,
   - une charge renforçante ;
   - un système anti-oxydant,
   en malaxant thermomécaniquement le tout, en une ou plusieurs fois, jusqu'à atteindre une température maximale comprise entre 110°C et 190°C ;
- refroidir l'ensemble à une température inférieure à 100°C ;
- incorporer ensuite un système de réticulation ;
- malaxer le tout jusqu'à une température maximale inférieure à 110°C,
et il est caractérisé en ce que ledit système antioxydant comporte au moins les antioxydants A et B décrits en détail précédemment, selon les proportions respectives préconisées.

La vulcanisation ou cuisson est conduite de manière connue à une température de préférence comprise entre 130°C et 200°C, sous pression, pendant un temps suffisant qui peut varier par exemple entre 5 et 90 min en fonction notamment de la température de cuisson, du système de vulcanisation adopté, de la cinétique de vulcanisation et par exemple de la taille du pneumatique considéré.

Le système de réticulation proprement dit est préférentiellement à base de soufre et d'un accélérateur primaire de vulcanisation. A ce système de vulcanisation viennent généralement s'ajouter, incorporés au cours de la première phase non-productive et/ou au cours de la phase productive, divers accélérateurs secondaires ou activateurs de vulcanisation connus tels que oxyde de zinc, acide stéarique, dérivés guanidiques (en particulier diphénylguanidine), retardateurs de vulcanisation, etc. Le soufre est utilisé à un taux préférentiel compris entre 1 et 10 pce, plus préférentiellement compris entre 2 et 8 pce, notamment lorsque l'invention est appliquée à un pneumatique du type Poids-lourd. L'accélérateur primaire de vulcanisation est utilisé à un taux préférentiel compris entre 0,5 et 5 pce, plus préférentiellement compris entre 0,5 et 2 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

Il va de soi que l'invention concerne les compositions de caoutchouc et les pneumatiques précédemment décrits tant à l'état dit "cru" (i.e., avant cuisson) qu'à l'état dit "cuit" ou vulcanisé (i.e., après réticulation ou vulcanisation).

### III. EXEMPLES DE REALISATION

### III-1. Synthèse de la 4,4'-bis(1,3-dimethylbutylamino)-triphénylamine

Le composé de formule (IV-b) a été préparé selon le schéma de synthèse indiqué à la Fig. 2, en s'inspirant notamment du procédé de synthèse connu décrit dans le document US 3277174 précité (exemple 7).

De manière plus détaillée, on a procédé en trois étapes (A, B et C) comme suit.

### A) Préparation de la 4,4'-dinitrotriphénylamine :

Dans un tricol de 2 litres équipé d'un thermomètre, d'un agitateur et d'un piège "Dean Stark" rempli de benzène, sont ajoutés 121 g (1 mole) de formanilide, 314 g (2,5 moles) de nitrochlorobenzène, 220 g ( 1,6 moles) de K₂CO₃ dans 115 ml de DMF et 5 ml de benzène. Le milieu est chauffé à 165-175°C pendant 21 heures avec une extraction permanente de l'eau formée. La réaction est refroidie et stoppée par 1 litre d'eau. Le précipité est filtré, mis en suspension avec de l'acide chlorhydrique dilué, puis filtré et mis de nouveau en suspension dans l'éthanol chaud. La suspension ainsi obtenue est filtrée pour obtenir 242 g (rendement de 72%) de 4,4'-dinitrotriphénylamine.

### B) Préparation de la 4,4'-diaminotriphénylamine :

Pour l'obtention de la 4,4'-diaminotriphénylamine, on procède ensuite en une réduction du composé précédent par hydrogénation dans l'isopropanol, à 100°C, sous environ 20 bars de pression H₂ et en présence de catalyseur Palladium (sur charbon).

### C) Synthèse de la 4,4'-bis(1,3 diméthylbutylamino)triphénylamine:

Dans un réacteur sont ensuite placés 85 g (soit 0,3 mol) de 4,4'-diaminotriphénylamine précédente, 400 ml (soit 3 moles) de 4-méthylpentan-2-one (ou "MIBK") en présence de 2 g de Pd (5% en poids sur charbon), sous environ 25 bars de pression H₂, pendant 1h 45min à 100-130°C puis 2h 30min à 130-135°C. Le catalyseur est séparé par filtration et l'excès de MIBK est enlevé par distillation. Le résidu (rendement égal à 92% environ) est purifié par chromatographie sur alumine. Le produit est recristallisé dans l'éthanol. On obtient ainsi le composé de formule (IV-b) avec un rendement total d'environ 66%.

### III-2. Préparation des compositions de caoutchouc

On procède pour les essais qui suivent de la manière suivante: on introduit dans un mélangeur interne, rempli à 70% et dont la température initiale de cuve est d'environ 60°C, un élastomère isoprénique, une charge renforçante (noir de carbone), puis, après une à deux minutes de malaxage, les divers autres ingrédients, y compris le ou les antioxydant(s) selon les cas, à l'exception du système de vulcanisation. On conduit alors un travail thermomécanique (phase non-productive) en une ou deux étapes (durée totale du malaxage égale par exemple à environ 7 min), jusqu'à atteindre une température maximale de "tombée" d'environ 165-170°C. On récupère le mélange ainsi obtenu, on le refroidit puis on ajoute le système de vulcanisation (soufre et accélérateur primaire sulfénamide) sur un mélangeur externe (homo-finisseur) à 30°C, en mélangeant le tout (phase productive) par exemple pendant 3 à 10 min.

Les compositions ainsi obtenues sont ensuite soit extrudées sous la forme de plaques (épaisseur de 2 à 3 mm) pour la mesure de leurs propriétés physiques ou mécaniques, soit calandrées pour réalisation d'un tissu câblé métallique formant une couche de ceinture (couche "de travail") d'un pneumatique Poids-lourd.

### III-3. Essais de caractérisation

Cet essai a pour but de démontrer les performances d'endurance améliorées d'une composition isoprénique pour ceinture de pneumatique, lorsqu'elle comporte un système antioxydant selon l'invention, comparativement à une première composition de caoutchouc témoin n'utilisant pas d'antioxydant et une seconde composition de caoutchouc témoin n'utilisant que l'antioxydant conventionnel ("6-PPD") de formule (III-b).

On prépare pour cela trois compositions à base de caoutchouc naturel :
- composition notée C-1 (témoin sans antioxydant) ;
- composition notée C-2 (témoin avec antioxydant conventionnel A) ;
- composition notée C-3 (conforme à l'invention, avec antioxydants A et B combinés).

Ces trois compositions, de formulations rigoureusement identiques hormis la nature et la concentration d'antioxydant, sont destinées à constituer la "gomme de calandrage" de couches de travail d'une ceinture de pneumatique Poids-lourd.

Les tableaux 1 et 2 donnent la formulation des trois compositions (tableau 1 - taux des différents produits exprimés en pce), leurs propriétés avant et après cuisson (60 min à 140°C), ainsi que les résultats au test d'endurance MFTRA, en unités relatives (u.r.) (base 100 retenue pour la composition témoin C-1, à l'état initial comme après vieillissement).

Le système de vulcanisation est constitué par soufre et sulfénamide. Dans la composition C-3 de l'invention, la moitié de l'antioxydant conventionnel (6-PPD de formule III-b) a été remplacée par l'antioxydant de formule (IV-b).

Rappelons que le composé 6-PPD, antioxydant de référence dans les compositions de caoutchouc pour pneumatiques, notamment dans les ceintures de ces derniers, a pour formule développée (III-b) :

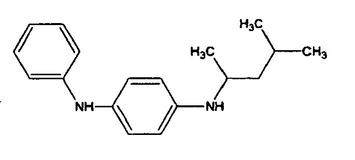

Pour comparaison, la 4,4'-bis(1,3-dimethylbutylamino)-triphénylamine utilisée en complément dans la composition C-3, a pour formule (IV-b) :

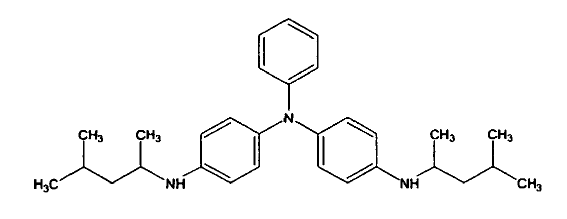

On peut noter immédiatement que la seconde molécule présente un encombrement stérique nettement plus important et donc une aptitude à diffuser moindre, ce qui pour l'homme du métier est a priori défavorable à une protection antifatigue efficace.

A l'examen des résultats du tableau 2, on note tout d'abord que les trois compositions testées présentent des propriétés de caoutchouterie identiques, tant avant cuisson (viscosité Mooney et propriétés de rhéologie) qu'après cuisson (propriétés mécaniques en extension).

En ce qui concerne maintenant l'endurance (test de fatigue MFTRA selon paragraphe I-D), on doit distinguer entre les propriétés à l'état initial et celles après vieillissement.

Sur des compositions non vieillies (état initial), on peut noter que l'endurance est améliorée d'un facteur deux, donc de manière très sensible, pour les compositions C-2 et C-3 comparativement à la composition témoin C-1 totalement dépourvue d'agent antioxydant.

Le remplacement de 50% de l'antioxydant A (conventionnel) par l'antioxydant B n'a donc, avant vieillissement des compositions, aucune incidence sur le résultat d'endurance.

On a toutefois noté que l'utilisation du seul antioxydant B - en d'autres termes le remplacement pur et simple de l'antioxydant A par l'antioxydant B dans des conditions par ailleurs identiques - conduisait à une performance dégradée (50% de gain seulement par rapport à la composition témoin C-1, au lieu de 100%).

Après vieillissement thermique, le gain en endurance apporté par l'antioxydant A (composition C-2), comparativement à la composition témoin (composition C-1) n'est pas modifié, soit un gain de 100% (200 en unités relatives par rapport à la base 100 sur le témoin C-1).

Par contre, de manière inattendue, on observe une endurance encore très sensiblement améliorée (puisque multipliée par trois par rapport au témoin C-1) sur la composition selon l'invention C-3, amélioration qui ne peut être attribuée qu'au remplacement d'une partie de l'antioxydant A par l'antioxydant B.

En conséquence, le système plastifiant de l'invention confère aux compositions de caoutchouc de l'invention une résistance à la fatigue globalement améliorée, avec un compromis entre résistance à l'état initial et après vieillissement thermique qui est amélioré, comparativement aux compositions de l'art antérieur.

Ce résultat laisse entrevoir à l'homme du métier une endurance élevée des ceintures et pneumatiques conformes à l'invention, vis-à-vis en particulier du problème de séparation des extrémités des nappes de sommet ("clivage") décrit en introduction de la présente demande.

**Tableau 1**

| Composition N°: | C-1 | C-2 | C-3 |
|---|---|---|---|
| NR (1) | 100 | 100 | 100 |
| noir de carbone (2) | 50 | 50 | 50 |
| antioxydant (3) | - | 2.0 | 1.0 |
| antioxydant (4) | - | - | 1.0 |
| ZnO (5) | 4 | 4 | 4 |
| acide stéarique (6) | 2.5 | 2.5 | 2.5 |
| soufre | 4 | 4 | 4 |
| accélérateur (7) | 1 | 1 | 1 |

| | | | |
|---|---|---|---|
| (1) caoutchouc naturel ; (2) noir de carbone N330 (grade ASTM) ; (3) N-1,3-diméthylbutyl-N-phényl-paraphénylènediamine ("Santoflex 6-PPD" de la société Flexsys) ; (4) 4,4'-bis(1,3-diméthylbutylamino)-triphénylamine ; (5) oxyde de zinc (grade industriel - société Umicore) ; (6) stéarine ("Pristerene 4931" - société Uniqema) ; (7) N-dicyclohexyl-2-benzothiazyl-sulfénamide ("Santocure DCBS" de la société Flexsys). | | | |

**Tableau 2**

| Composition N°: | C-1 | C-2 | C-3 |
|---|---|---|---|
| *Propriétés avant cuisson:* | | | |
| Mooney (UM) | 64 | 60 | 65 |
| tᵢ (min) | 3.2 | 3.0 | 3.2 |
| t₉₉ (min) | 17.3 | 17.0 | 17.3 |
| t₉₉ - tᵢ (min) | 14.1 | 13.9 | 14.2 |
| K (min⁻¹) | 0.326 | 0.330 | 0.325 |
| | | | |
| *Propriétés après cuisson:* | | | |
| E10 (MPa) | 7.7 | 6.8 | 7.8 |
| E100 (MPa) | 8.4 | 7.4 | 7.5 |
| E300 (MPa) | 20.2 | 18.0 | 18.1 |
| contrainte rupture (MPa) | 28 | 28 | 27 |
| allongement rupture (%) | 327 | 348 | 368 |
| | | | |
| *Endurance (fatigue MFTRA)* | | | |
| A l'état initial (u. r.) : | 100 | 200 | 200 |
| Après vieillissement (u. r.) : | 100 | 200 | 300 |

## Revendications

1. Composition de caoutchouc à base d'au moins un élastomère diénique, une charge renforçante, un système de réticulation et un système antioxydant, **caractérisée en ce que** le dit système antioxydant comporte au moins deux antioxydants "A" et "B" :
A. une N-alkyl-N'-phényl-paraphénylènediamine répondant à la formule (I) : 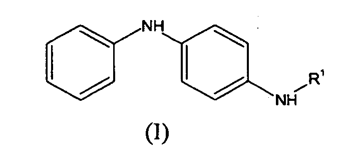
B. une 4,4'-bis(akylamino)-triphénylamine répondant à la formule (II): 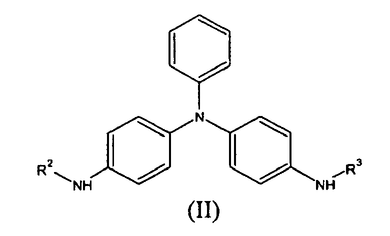 formules dans lesquelles R¹, R² et R³, identiques ou différents, représentent chacun un groupe alkyle, linéaire ou ramifié, ayant de 1 à 12 atomes de carbone ou un groupe cycloalkyle ayant de 5 à 8 atomes de carbone, le rapport pondéral A/B étant compris entre 1/5 et 5/1.

2. Composition selon la revendication 1, dans laquelle R¹, R² et R³, identiques ou différents, représentent chacun un alkyle ayant de 2 à 8 atomes de carbone ou un groupe cyclohexyle.

3. Composition selon la revendication 2, dans laquelle R¹, R² et R³, identiques ou différents, représentent chacun un groupe alkyle choisi dans le groupe constitué par l'isopropyle, le 1,3-diméthylbutyle et le 1,4-diméthylpentyle.

4. Composition selon la revendication 3, dans laquelle l'antioxydant A est la N-isopropyl-N'-phényl-paraphénylènediamine répondant à la formule (III-a) :

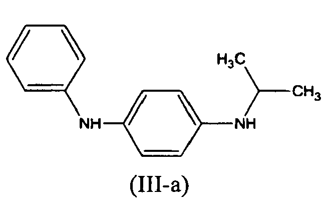

5. Composition selon la revendication 3, dans laquelle l'antioxydant A est la N-1,3-diméthylbutyl-N'-phényl-paraphénylènediamine répondant à la formule (III-b) :

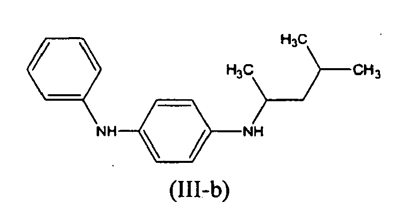

6. Composition selon l'une quelconque des revendications 3 à 5, dans laquelle l'antioxydant B est la 4,4'-bis(isopropylamino)-triphénylamine répondant à la formule (IV-a):

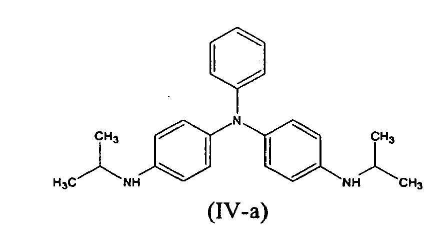

7. Composition selon l'une quelconque des revendications 3 à 5, dans laquelle l'antioxydant B est la 4,4'-bis(1,3-dimethylbutylamino)-triphénylamine répondant à la formule (IV-b) :

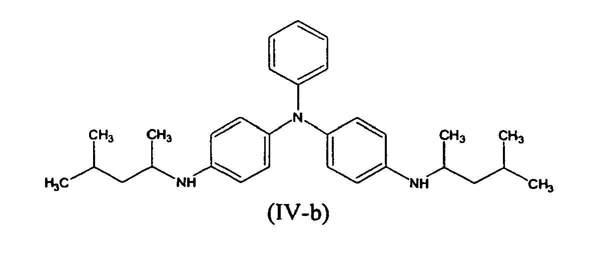

8. Composition selon l'une quelconque des revendications 3 à 5, dans laquelle l'antioxydant B est la 4,4'-bis(1,4-diméthylpentylamino)-triphénylamine répondant à la formule (IV-c) :

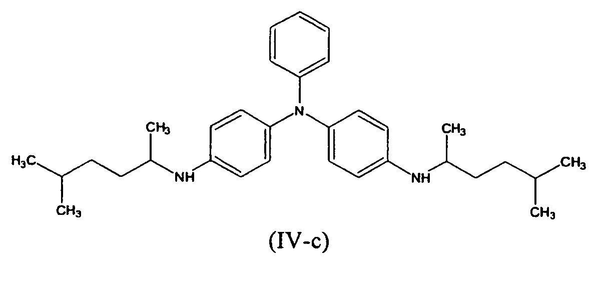

9. Composition selon l'une quelconque des revendications 1 à 8, dans laquelle le taux de chaque antioxydant A et B est compris entre 0,5 et 5 pce, de préférence entre 0,5 et 2 pce.

10. Composition selon l'une quelconque des revendications 1 à 9, dans laquelle le rapport pondéral A/B est compris entre 1/4 et 4/1.

11. Composition selon l'une quelconque des revendications 1 à 10, dans laquelle l'élastomère diénique est choisi dans le groupe constitué par les polybutadiènes, le caoutchouc naturel, les polyisoprènes de synthèse, les copolymères de butadiène, les copolymères d'isoprène et les mélanges de ces élastomères.

12. Composition selon la revendication 11, dans laquelle l'élastomère diénique est un élastomère isoprénique.

13. Composition selon la revendication 12, dans laquelle l'élastomère isoprénique est choisi dans le groupe constitué par le caoutchouc naturel, les polyisoprènes cis-1,4 de synthèse, les copolymères d'isoprène et les mélanges de ces élastomères.

14. Composition selon la revendication 13, dans laquelle l'élastomère isoprénique est du caoutchouc naturel.

15. Utilisation, pour la fabrication ou le rechapage d'un pneumatique, d'une composition de caoutchouc selon l'une quelconque des revendications 1 à 14.

16. Système antioxydant utilisable notamment pour la protection anti-vieillissement d'une composition de caoutchouc pour pneumatique, **caractérisé en ce que** ledit système comporte au moins deux antioxydants "A" et "B" :
A. une N-alkyl-N'-phényl-paraphénylènediamine répondant à la formule (I) : 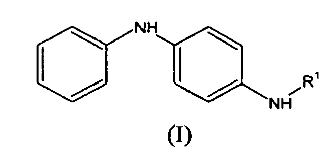
B. une 4,4'-bis(alkylamino)-triphénylamine répondant à la formule (II): 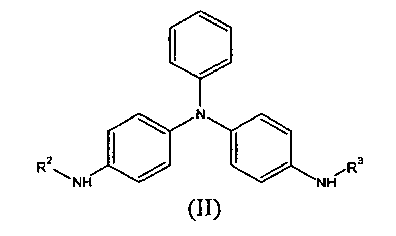 formules dans lesquelles R¹, R² et R³, identiques ou différents, représentent chacun un groupe alkyle, linéaire ou ramifié, ayant de 1 à 12 atomes de carbone ou un groupe cycloakyle ayant de 5 à 8 atomes de carbone, le rapport pondéral A/B étant compris entre 0,2 et 5,0.

17. Utilisation, pour la protection anti-vieillissement d'une composition de caoutchouc, d'un système antioxydant selon la revendication 16.

18. Pneumatique comportant une composition de caoutchouc selon l'une quelconque des revendications 1 à 14.

19. Pneumatique selon la revendication 18, ledit pneumatique étant un pneumatique Poids-lourd.

20. Pneumatique selon les revendications 18 ou 19, la composition de caoutchouc selon l'une quelconque des revendications 1 à 14 se trouvant dans la ceinture dudit pneumatique.

21. Procédé pour préparer une composition de caoutchouc à base d'au moins un élastomère diénique, une charge renforçante, un système de réticulation et un système anti-oxydant, ledit procédé comportant les étapes suivantes :
• incorporer à un élastomère diénique, dans un mélangeur,
- une charge renforçante ;
- un système anti-oxydant,
en malaxant thermomécaniquement le tout, en une ou plusieurs fois, jusqu'à atteindre une température maximale comprise entre 110°C et 190°C ;
• refroidir l'ensemble à une température inférieure à 100°C ;
• incorporer ensuite un système de réticulation ;
• malaxer le tout jusqu'à une température maximale inférieure à 110°C,
et étant **caractérisé en ce que** ledit système antioxydant comporte au moins deux antioxydants "A" et "B" :
A. une N-alkyl-N'-phényl-paraphénylènediamine répondant à la formule (I) : 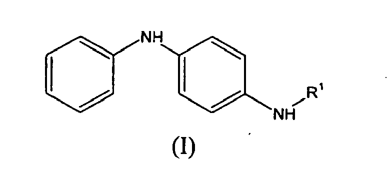
B. une 4,4'-bis(alkylamino)-triphénylamine répondant à la formule (II): 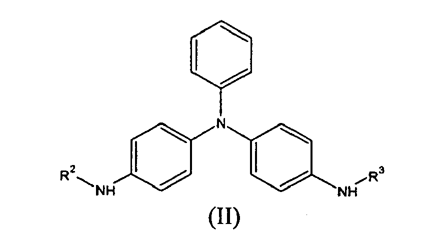 formules dans lesquelles R¹, R² et R³, identiques ou différents, représentent chacun un groupe alkyle, linéaire ou ramifié, ayant de 1 à 12 atomes de carbone ou un groupe cycloalkyle ayant de 5 à 8 atomes de carbone, le rapport pondéral A/B étant compris entre 0,2 et 5,0.

## Claims

1. Rubber composition based on at least one diene elastomer, a reinforcing filler, a crosslinking system and an antioxidant system, **characterized in that** said antioxidant system comprises at least two antioxidants "A" and "B":
A. an N-alkyl-N'-phenyl-*para*-phenylenediamine corresponding to the formula (I): 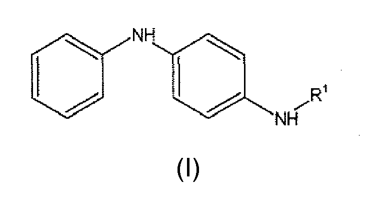
B. a 4,4'-bis(alkylamino)triphenylamine corresponding to the formula (II): 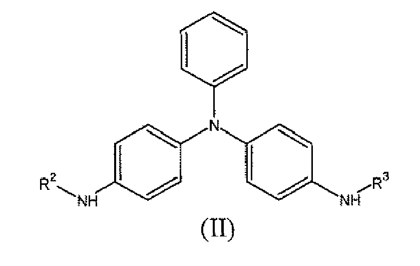 in which formulae, R¹, R² and R³, which are identical or different, each represent a linear or branched alkyl group having from 1 to 12 carbon atoms or a cycloalkyl group having from 5 to 8 carbon atoms, the A/B weight ratio being between 1/5 and 5/1.

2. Composition according to Claim 1, in which R¹, R² and R³, which are identical or different, each represent an alkyl group having from 2 to 8 carbon atoms or a cyclohexyl group.

3. Composition according to Claim 2, in which R¹, R² and R³, which are identical or different, each represent an alkyl group chosen from the group composed of isopropyl, 1,3-dimethylbutyl and 1,4-dimethylpentyl.

4. Composition according to Claim 3, in which antioxidant A is N-isopropyl-N'-phenyl-*para*-phenylenediamine corresponding to the formula (III-a):

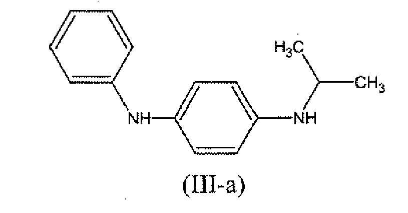

5. Composition according to Claim 3, in which antioxidant A is N-1,3-dimethylbutyl-N'-phenyl-*para-*phenylenediamine corresponding to the formula (III-b):

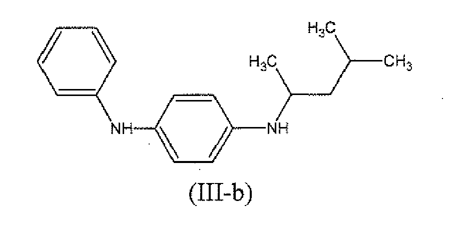

6. Composition according to any one of Claims 3 to 5, in which antioxidant B is 4,4'-bis(isopropylamino)-triphenylamine corresponding to the formula (IV-a):

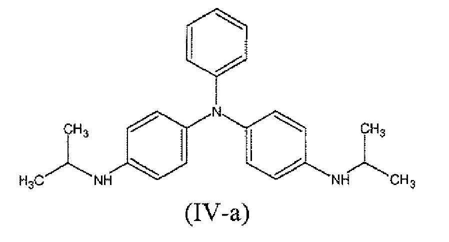

7. Composition according to any one of Claims 3 to 5, in which antioxidant B is 4,4'-bis(1,3-dimethylbutylamino)triphenylamine corresponding to the formula (IV-b):

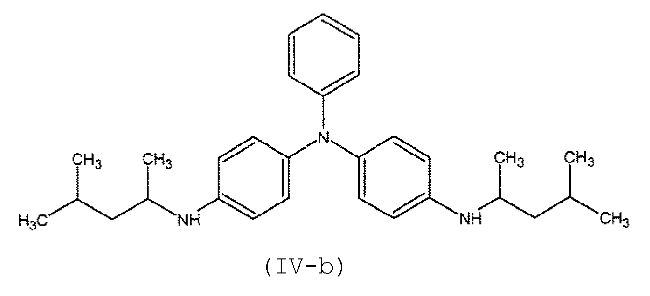

8. Composition according to any one of Claims 3 to 5, in which antioxidant B is 4,4'-bis(1,4-dimethylpentylamino)triphenylamine corresponding to the formula (IV-c):

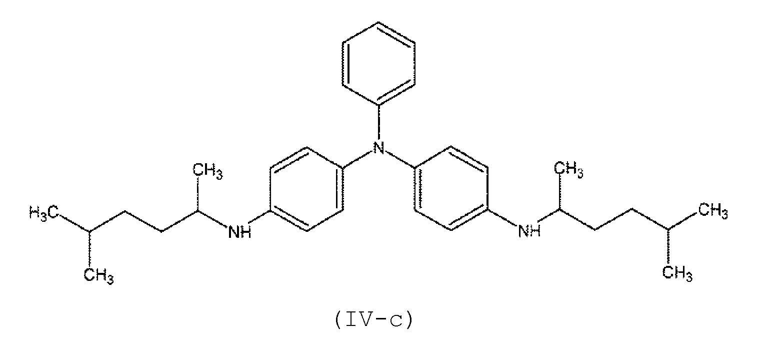

9. Composition according to any one of Claims 1 to 8, in which the content of each antioxidant A and B is between 0.5 and 5 phr, preferably between 0.5 and 2 phr.

10. Composition according to any one of Claims 1 to 9, in which the A/B weight ratio is between 1/4 and 4/1.

11. Composition according to any one of Claims 1 to 10, in which the diene elastomer is chosen from the group formed by polybutadienes, natural rubber, synthetic polyisoprenes, butadiene copolymers, isoprene copolymers and blends of these elastomers.

12. Composition according to Claim 11, in which the diene elastomer is an isoprene elatomer.

13. Composition according to Claim 12, in which the isoprene elastomer is chosen from the group composed of natural rubber, synthetic cis-1,4-polyisoprenes, isoprene copolymers and blends of these elastomers.

14. Composition according to Claim 13, in which the isoprene elastomer is natural rubber.

15. Use, for manufacturing or retreading a tyre, of a rubber composition according to any one of Claims 1 to 14.

16. Antioxidant system that can be used in particular for the anti-ageing protection of a rubber composition for a tyre, **characterized in that** said system comprises at least two antioxidants "A" and "B":
A. an N-alkyl-N'-phenyl-*para*-phenylenediamine corresponding to the formula (I): 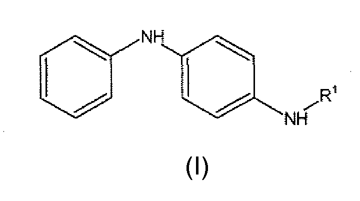
B. a 4,4'-bis(alkylamino)triphenylamine corresponding to the formula (II): 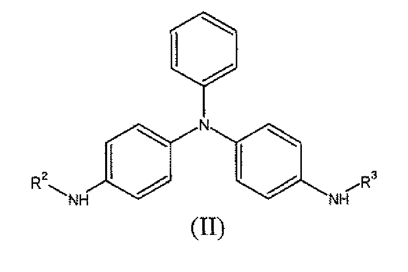 in which formulae, R¹, R² and R³, which are identical or different, each represent a linear or branched alkyl group having from 1 to 12 carbon atoms or a cycloalkyl group having from 5 to 8 carbon atoms, the A/B weight ratio being between 0.2 and 5.0.

17. Use, for the anti-ageing protection of a rubber composition, of an antioxidant system according to Claim 16.

18. Tyre comprising a rubber composition according to any one of Claims 1 to 14.

19. Tyre according to Claim 18, said tyre being a heavy vehicle tyre.

20. Tyre according to Claim 18 or 19, the rubber composition according to any one of Claims 1 to 14 being in the belt of said tyre.

21. Process for preparing a rubber composition based on at least one diene elastomer, a reinforcing filler, a crosslinking system and an antioxidant system, said process comprising the following steps:
• incorporating into a diene elastomer, in a mixer:
- a reinforcing filler; and
- an antioxidant system,
by thermomechanically kneading the entire mixture, in one or more stages, until a maximum temperature between 110°C and 190°C is reached;
• cooling the entire mixture to a temperature below 100°C;
• then incorporating a crosslinking system;
• kneading the entire mixture up to a maximum temperature below 110°C,
and being **characterized in that** said antioxidant system comprises at least two antioxidants "A" and "B":
A. an N-alkyl-N'-phenyl-*para*-phenylenediamine corresponding to the formula (I): 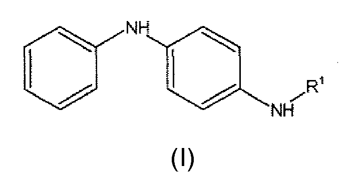
B. a 4,4'-bis(alkylamino)triphenylamine corresponding to the formula (II): 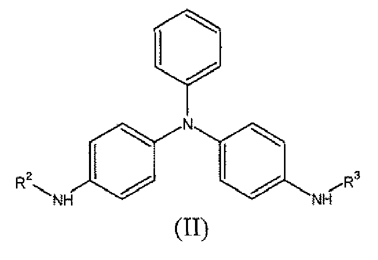 in which formulae, R¹, R² and R³, which are identical or different, each represent a linear or branched alkyl group having from 1 to 12 carbon atoms or a cycloalkyl group having from 5 to 8 carbon atoms, the A/B weight ratio being between 0.2 and 5.0.

## Patentansprüche

1. Kautschukzusammensetzung auf Basis mindestens eines Dienelastomers, eines verstärkenden Füllstoffs, eines Vernetzungssystems und eines Antioxidanssystems, **dadurch gekennzeichnet, daß** das Antioxidanssystem mindestens zwei Antioxidantien "A" und "B" umfaßt:
A. ein N-Alkyl-N'-phenyl-para-phenylendiamin der Formel (I): 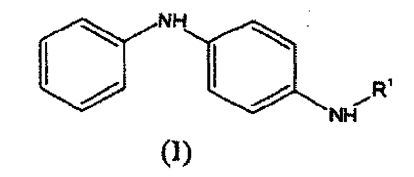
B. ein 4,4'-Bis(alkylamino)triphenylamin der Formel (II) : 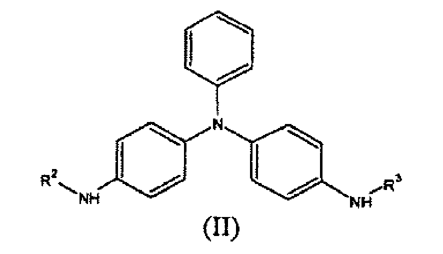 worin R¹, R² und R³ gleich oder verschieden sind und jeweils für eine lineare oder verzweigte Alkylgruppe mit 1 bis 12 Kohlenstoffatomen oder eine Cycloalkylgruppe mit 5 bis 8 Kohlenstoffatomen stehen, wobei das A/B-Gewichtsverhältnis zwischen 1/5 und 5/1 liegt.

2. Zusammensetzung nach Anspruch 1, in der R¹, R² und R³ gleich oder verschieden sind und jeweils für ein Alkyl mit 2 bis 8 Kohlenstoffatomen oder eine Cyclohexylgruppe stehen.

3. Zusammensetzung nach Anspruch 2, in der R¹, R² und R³ gleich oder verschieden sind und jeweils für eine Alkylgruppe aus der Gruppe bestehend aus Isopropyl, 1,3-Dimethylbutyl und 1,4-Dimethylpentyl stehen.

4. Zusammensetzung nach Anspruch 3, in der es sich bei dem Antioxidans A um N-Isopropyl-N'-phenyl-para-phenylendiamin der Formel (III-a): 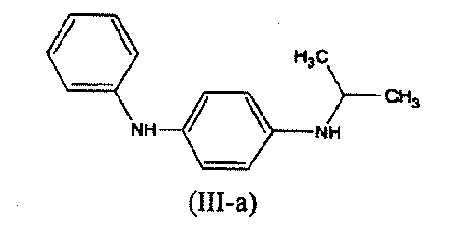 handelt.

5. Zusammensetzung nach Anspruch 3, in der es sich bei dem Antioxidans A um N-1,3-Dimethylbutyl-N'-phenyl-para-phenylendiamin der Formel (III-b): 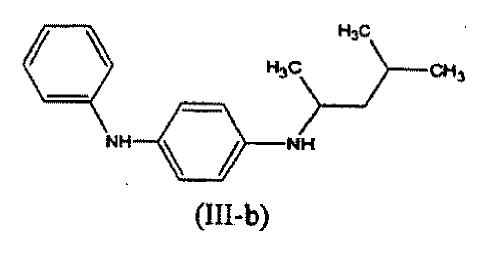 handelt.

6. Zusammensetzung nach einem der Ansprüche 3 bis 5, in der es sich bei dem Antioxidans B um 4,4'-Bis(isopropylamino)triphenylamin der Formel (IVa) : 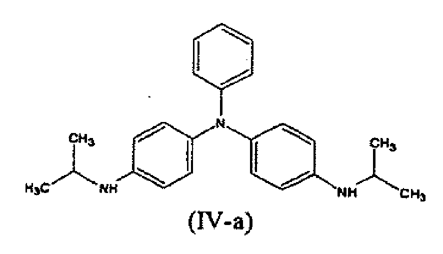 handelt.

7. Zusammensetzung nach einem der Ansprüche 3 bis 5, in der es sich bei dem Antioxidans B um 4,4'-Bis(1,3-dimethylbutylamino)triphenylamin der Formel (IV-b): 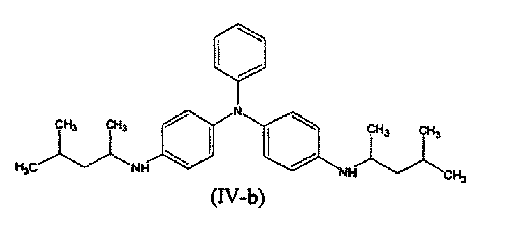 handelt.

8. Zusammensetzung nach einem der Ansprüche 3 bis 5, in der es sich bei dem Antioxidans B um 4,4'-Bis(1,4-dimethylpentylamino)triphenylamin der Formel (IV-c): 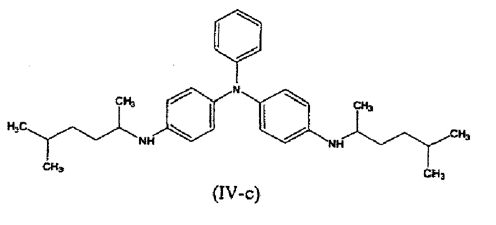 handelt.

9. Zusammensetzung nach einem der Ansprüche 1 bis 8, in der der Gehalt an Antioxidans A und B jeweils zwischen 0,5 und 5 phr und vorzugsweise zwischen 0,5 und 2 phr liegt.

10. Zusammensetzung nach einem der Ansprüche 1 bis 9, in der das A/B-Gewichtsverhältnis zwischen 1/4 und 4/1 liegt.

11. Zusammensetzung nach einem der Ansprüche 1 bis 10, in der das Dienelastomer aus der Gruppe bestehend aus Polybutadienen, Naturkautschuk, synthetischen Polyisoprenen, Butadiencopolymeren, Isoprencopolymeren und Mischungen dieser Elastomere ausgewählt ist.

12. Zusammensetzung nach Anspruch 11, in der es sich bei dem Dienelastomer um ein Isoprenelastomer handelt.

13. Zusammensetzung nach Anspruch 12, in der das Isoprenelastomer aus der Gruppe bestehend aus Naturkautschuk, synthetischen cis-1,4-Polyisoprenen, Isoprencopolymeren und Mischungen dieser Elastomere ausgewählt ist.

14. Zusammensetzung nach Anspruch 11, in der es sich bei dem Isoprenelastomer um Naturkautschuk handelt.

15. Verwendung einer Kautschukzusammensetzung nach einem der Ansprüche 1 bis 14 zur Herstellung oder Runderneuerung eines Reifens.

16. Antioxidanssystem, das insbesondere zum Alterungsschutz einer Kautschukzusammensetzung für Reifen verwendet werden kann, **dadurch gekennzeichnet, daß** das System mindestens zwei Antioxidantien "A" und "B" umfaßt:
A. ein N-Alkyl-N'-phenyl-para-phenylendiamin der Formel (I): 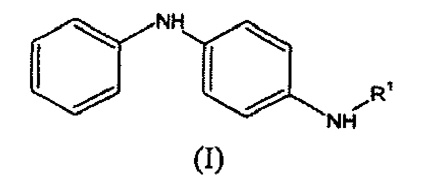
B. ein 4,4'-Bis(alkylamino)triphenylamin der Formel (II) : 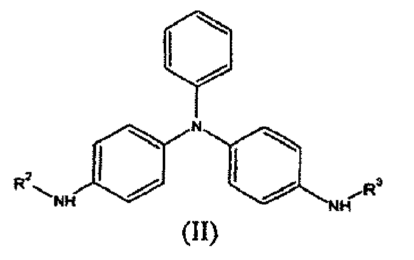 worin R¹, R² und R³ gleich oder verschieden sind und jeweils für eine lineare oder verzweigte Alkylgruppe mit 1 bis 12 Kohlenstoffatomen oder eine Cycloalkylgruppe mit 5 bis 8 Kohlenstoffatomen stehen, wobei das A/B-Gewichtsverhältnis zwischen 0,2 und 5,0 liegt.

17. Verwendung eines Antioxidanssystems nach Anspruch 16 zum Alterungsschutz einer Kautschukzusammensetzung.

18. Reifen, umfassend eine Kautschukzusammensetzung nach einem der Ansprüche 1 bis 14.

19. Reifen nach Anspruch 18, bei dem es sich um einen Lastkraftwagenreifen handelt.

20. Reifen nach Anspruch 18 oder 19, wobei die Kautschukzusammensetzung nach einem der Ansprüche 1 bis 14 sich im Gürtel des Reifens befindet.

21. Verfahren zur Herstellung einer Kautschukzusammensetzung auf Basis mindestens eines Dienelastomers, eines verstärkenden Füllstoffs, eines Vernetzungssystems und eines Antioxidanssystems, bei dem man:
• in einem Mischer in ein Dienelastomer
- einen verstärkenden Füllstoff,
- ein Antioxidanssystem einarbeitet, indem man das Ganze ein- oder mehrmals bis zum Erreichen einer Höchsttemperatur zwischen 110°C und 190°C thermodynamisch mischt;
• das Ganze auf eine Temperatur von weniger als 100°C abkühlt;
• dann ein Vernetzungssystem einarbeitet und
• das Ganze bis zu einer Höchsttemperatur von weniger als 110°C mischt,
**dadurch gekennzeichnet, daß** das Antioxidanssystem mindestens zwei Antioxidantien "A" und "B" umfaßt:
A. ein N-Alkyl-N'-phenyl-para-phenylendiamin der Formel (I): 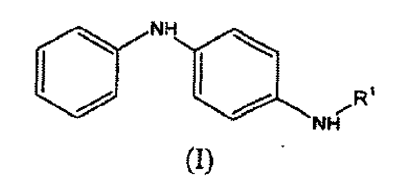
B. ein 4,4'-Bis(alkylamino)triphenylamin der Formel (II) : 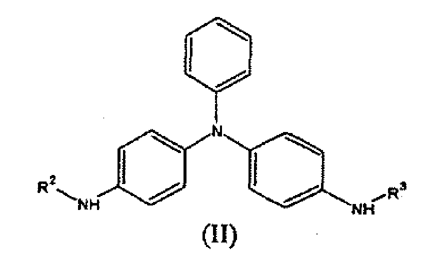 worin R¹, R² und R³ gleich oder verschieden sind und jeweils für eine lineare oder verzweigte Alkylgruppe mit 1 bis 12 Kohlenstoffatomen oder eine Cycloalkylgruppe mit 5 bis 8 Kohlenstoffatomen stehen, wobei das A/B-Gewichtsverhältnis zwischen 0,2 und 5,0 liegt.
